# EUROPEAN PATENT SPECIFICATION

(11) **EP 1 388 435 B1**
(45) Date of publication and mention of the grant of the patent: **14.04.2010**
(21) Application number: 02726424.1
(22) Date of filing: 15.05.2002
(51) Int. Cl.: B60C 15/00, B60C 15/06

(54) **PNEUMATIC TIRE**
LUFTREIFEN
PNEU PNEUMATIQUE

(30) Priority: 15.05.2001 JP 2001144294
(43) Date of publication of application: 11.02.2004
(73) Proprietor: Bridgestone Corporation, Tokyo 104-8340 (JP)
(72) Inventor: SAEKI, Tsutomu, BRIDGESTONE CORPORATION, Kodaira-shi, Tokyo 187-0031 (JP)
(74) Representative: Whalley, Kevin
(86) International application number: PCT/JP2002/004715
(87) International publication number: WO 2002/102612

(56) References cited:
- EP-A- 1 024 033
- EP-A1- 0 776 776
- EP-A1- 0 778 161
- JP-A- 1 156 108
- JP-A- 2000 142 039
- JP-A- 2000 301 918
- PATENT ABSTRACTS OF JAPAN vol. 2000, no. 13, 5 February 2001 (2001-02-05) & JP 2000 301915 A (BRIDGESTONE CORP), 31 October 2000 (2000-10-31)

## Description

This invention relates to a pneumatic tire, particularly, a heavy duty pneumatic radial tire, and more particularly proposes a technique such that a resistance to pull-out of a carcass ply is improved in a structure of a bead portion wherein side portions of the carcass ply are wound around bead cores embedded in the respective bead portions and substantially along a profile line of the bead core at a cross-section thereof.

In the heavy duty pneumatic radial tire, at least one carcass ply is toroidally extended from a tread portion through a sidewall portion to a bead portion, and a side portion of the carcass ply is fixed by winding around a bead core embedded in the respective bead portion from an inside toward an outside in a radial direction of the tire. In this case, it is common to make a turnup height of the side portion of the carcass ply sufficiently high for preventing the pulling-out of the ply cords during the running of the tire under loading.

In such a bead portion structure, however, a step difference in rigidity is caused between the inner side and the outer side bordering a radially outer end position of the turnup portion of the carcass ply in the radial direction of the tire, so that stress concentrates in the radially outer end and in the vicinity thereof through repetitive flexible deformation and circumferentially shear deformation from the bead portion to the sidewall portion during the running of the tire under loading, and hence it is easy to cause separation failure of the outer end from the rubber portion. As a result, there is caused a problem that the above separation failure progresses toward, for example, both inside and outside surfaces of the bead portion to cause bead portion cracking.

Also, a similar problem is caused on the basis that fine cracks resulted from picking of the end of the ply cord to the rubber portion facing the cord end grow during the running of the tire under loading.

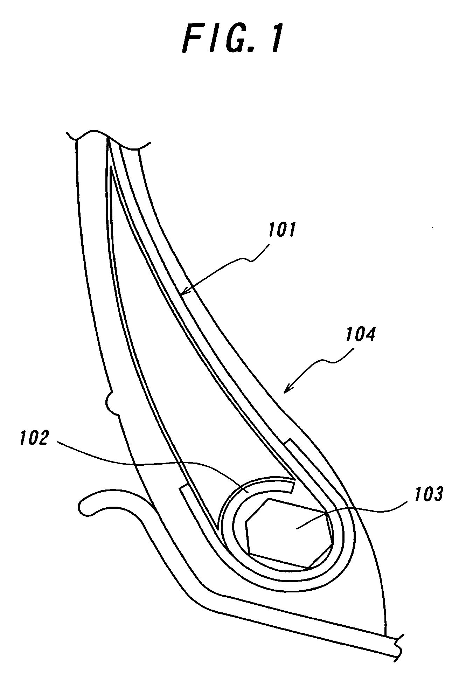

In order to solve such problems, it is recently proposed that, as shown by a cross section of the bead portion in FIG. 1, a large protrusion of a side portion 102 of a carcass ply 101 outward from a bead core 103 in the radial direction of the tire is removed by winding the side portion 102 along a circumferential face of a bead core 103 having, for example, a hexagonal shape in cross section and therearound instead of winding to a higher position with respect to the bead core 103 outward in the radial direction of the tire, whereby the separation failure of the turnup end of the carcass ply from a rubber portion can be prevented to improve the durability of the bead portion 104.

In this proposed technique, however, the side portion 102 of the carcass ply 101 is wound around the bead core 103 through relatively soft coating rubber layers therefor, and when a large tensile force is particularly applied to a main body portion of the carcass ply extending between the bead cores, for example under an action of a load to the tire, these coating rubber layers can not exert a sufficient resistance to pulling-out of the carcass ply and hence ply cords thereof, so that there is a problem that pulling-out of the carcass ply 101 is still liable to occur.

It is, therefore, an object of the invention to solve the above problems and to provide a pneumatic tire in which the fear of pulling-out the carcass ply is sufficiently removed while sufficiently preventing the occurrence of bead portion cracking resulted from highly winding-up of the side portion of the carcass ply outward in the radial direction of the tire.

Attention is also drawn to the disclosure of EP-1024033A, which corresponds to the preamble of claim 1.

The present invention provides a pneumatic tire comprising a pair of bead portions, each including a bead core having a hexagonal shape in section, and a carcass ply extending between the bead cores and winding its side portion around the respective bead core, and a pulling-out restraint layer for the carcass ply is arranged between the bead core and a winding portion of the carcass ply, wherein the winding portion of the carcass ply has one or more bending parts in a wingding direction around the bead core, and
wherein a free end part of the winding portion, extending from a leading end bending part toward a winding end, straightly approaches the top surface of the bead core.

In this tire, the occurrence of cracking in the bead portion can sufficiently be prevented by winding the side portion of the carcass ply around the bead core, for example, along a cross-sectional profile line thereof, instead of winding to a higher position outward in the radial direction of the tire, while the pulling-out of the carcass ply can effectively be prevented by arranging the pulling-out restraint layer for the carcass ply between the bead core and the winding portion of the carcass ply, which is different from coating rubbers for the bead core and the carcass ply, to sufficiently support tensile force acting to the main body portion of the carcass ply with the pulling-out restraint layer to thereby reduce strain generated between the bead core and the turnup portion.

It is preferable that the pulling-out restraint layer is constituted by a rubber composition having a JIS A hardness of 20-90, more preferably 40-60.

The term "JIS A hardness" used herein means a numeric value as measured at a test temperature of 20°C by using a durometer hardness test machine of type A defined by JIS K 6253-1993.

According to the former case of using the rubber composition as the pulling-out restraint layer, the function of reducing the strain with respect to the repeated input can be developed over a long period of time, while according to the latter case, the rubber composition can develop a proper restraining force against the pulling-out. That is, when Shore A hardness is less than 20, it is difficult for the rubber composition to develop a function for supporting sufficient tensile force or a function for reducing the strain, while when it exceeds 90, there is a fear that the pulling-out restraint layer itself is broken relatively prematurely.

Also, it is preferable that a distance from a winding end of the carcass ply to a surface of the bead core opposite thereto is not less than 0.3 mm but not more than 7 mm, particularly not less than 0.3 mm but not more than 4 mm.

This is due to the fact that when the pulling-out restraint layer between the winding end and the bead core is too thin, it is difficult to develop a sufficient strain reducing function due to separation failure or the like of the pulling-out restraint layer, while when it is too thick, it is difficult to exert a sufficient restraining force on the carcass ply with the bead core.

Therefore, when the distance from the whole of the winding portion of the carcass ply to the surface of the bead core is made within a range of 0.3-7 mm, the pulling-out of the carcass ply can be more effectively prevented.

Furthermore, the winding portion of the carcass ply is provided with one or more bending parts in a winding direction around the bead core.

In this case, the carcass ply can be wound so as to further approach to the peripheral face of the bead core, and hence the winding shape thereof can be approximated to an expected shape.

In all cases, it is preferable that a distance of radius from a center of the tire to the winding end of the carcass ply is not more than a distance of radius in a position located at an outermost side in the whole winding portion of the carcass ply in the radial direction of the tire.

It is preferable that a distance from the winding end of the carcass ply to a main body portion of the carcass ply extending between the bead cores is not less than 0.1 mm but not more than 5 mm.

That is, when the distance is less than 0.1 mm, the stress concentrates in the winding end upon fall-down deformation of the sidewall portion of the tire under the application of a heavy load to the tire, and there is a fear of generating separation failure and cracking, while when it exceeds 5 mm, there is a fear that the pulling-out restraint layer can not sufficiently develop the function of the layer itself.

In the invention, when the winding portion of the carcass ply is provided with one or more bending parts located approximately in correspondence to corner parts of the bead core having corner parts in its cross section, the restraining force of the carcass ply by the bead core can be further enhanced.

The invention will be further described with reference to the accompanying drawings, wherein

FIG. 1 is a cross-sectional view of a bead portion in the conventionally proposed technique with respect to a winding structure of a carcass ply.

FIG. 2 is a cross-sectional view showing an embodiment which is not however according to the invention likewise FIG. 1.

FIG. 3 is an enlarged section view of a main part of FIG. 1.

FIG. 4 is an enlarged section view of a main part showing another embodiment of the invention (wherein FIG. 4c is not however according to the invention).

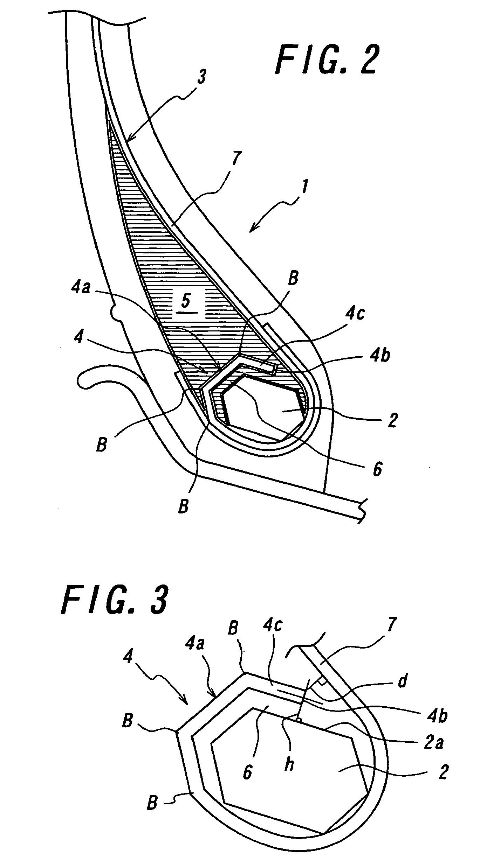

In FIG. 2 showing an embodiment at a posture of applying an air pressure to a tire assembled on a rim, numeral 1 is a bead portion and numeral 2 is a bead core embedded in the bead portion 1.

In this figure, a cross section shape of a bead core 2 having a ring shape as a whole is hexagonal. With respect to the bead core 2, a side portion of a carcass ply 3 as a skeleton reinforcing layer is wound along substantially a profile line of the cross section of the bead core 2 from an inside of the bead portion 1. A pulling-out restraint layer which is a rubber composition 6 constituting a part of a stiffener 5 in the figure is arranged between a neighboring portion 4a to a winding end of a winding portion 4, that is a portion extending outward from an inner peripheral face of the hexagonal bead core 2 in the radial direction in the figure and a surface of the bead core.

The winding portion 4 is provided with one or more bending parts in a winding direction around the bead core 2, three bending parts B in the figure for the purpose of performing the winding so as to approach the winding portion 4 to the surface of the bead core. Moreover, when the bead core 2 has corner parts as shown in the figure, it is preferable to arrange the bending parts B in correspondence to the corner parts. Also, the winding portion 4 is extended straight between the bending parts and at a free end part located from the leading-end bending part toward a top side, respectively.

It is preferable that at least the neighboring portion 4a to the winding end is extended at substantially a constant distance with respect to the surface of the bead core opposite thereto, for example substantially in parallel thereto to make the thickness of the rubber composition 6 interposed between the neighboring portion and the bead core substantially uniform for the purpose of enhancing the total restraining force of the rubber composition 6 against the pulling-out of the carcass ply 3.

Moreover, it is preferable that the hardness of the rubber composition 6 is made 20-90 as JIS A hardness for the purpose of developing a proper restraining force against the pulling-out.

As shown by an enlarged section view of a main portion in FIG. 3, it is more preferable that a distance h from a winding end 4b of the carcass ply 3 to a surface of the bead core opposite thereto is not less than 0.3 mm but not more than 7 mm. Also, it is preferable that a distance d from the winding end 4b to a main body portion 7 of the carcass ply extending between the bead cores is not less than 0.1 mm but not more than 5 mm, particularly not less than 0.3 mm but not more than 4 mm.

In addition, with respect to a free end part 4c located from the leading-end bending part B toward a top side in the illustrated embodiment, considering rectangular coordinates in which a normal line drawn through the winding end 4b to the surface of the bead core is an ordinate and a straight line segment perpendicular to the ordinate through the winding end 4b is an abscissa, an angle of the free end part 4c with respect to the abscissa is 0°.

In such rectangular coordinates, when the abscissa is standard and a state of extending the free end part 4c at an upper side of the abscissa, that is in a first quadrant or a second quadrant is positive and a state of extending at a lower side of the abscissa, that is in a third quadrant or a forth quadrant, is negative, an inclination angle of the free end part 4c with respect to the abscissa is preferably within a range of -15° to +60°.

In this case, the free end part 4c frequently approaches to the surface of the bead core toward the winding end, so that the restraining force to the carcass ply through the bead core can be gradually enhanced toward the top end and hence the resistance to pulling-out can be enhanced.

When the inclination angle of the free end part exceeds 60°, the top end of the free end part 4c steeply approaches to the surface of the bead core, and also the thickness of the pulling-out restraint layer 6 interposed between the free end part and the bead core surface 2a steeply changes, and hence strain amount of the pulling-out restraint layer itself resulted from the tensile force in the pull-out direction applied to the carcass ply 3 largely changes in the extending direction of the free end part 4c, so that there is a fear that premature separation from at least one of the bead core surface 2a and the free end part 4c, shear breakage of the pulling-out restraint layer itself and the like are particularly caused in a thinnest portion of the pulling-out restraint layer 6 by the repeated tensile forces applied to the carcass ply 3. While, when it is less than -15°, the free end part itself is too far from the bead core and hence it is difficult to sufficiently restrain the winding portion of the carcass ply through the bead core.

According to the tire having the above construction, the rubber composition 6 can sufficiently support the tensile force applied to the main body 7 of the carcass ply as previously mentioned, so that the pulling-out of the carcass ply can be effectively prevented.

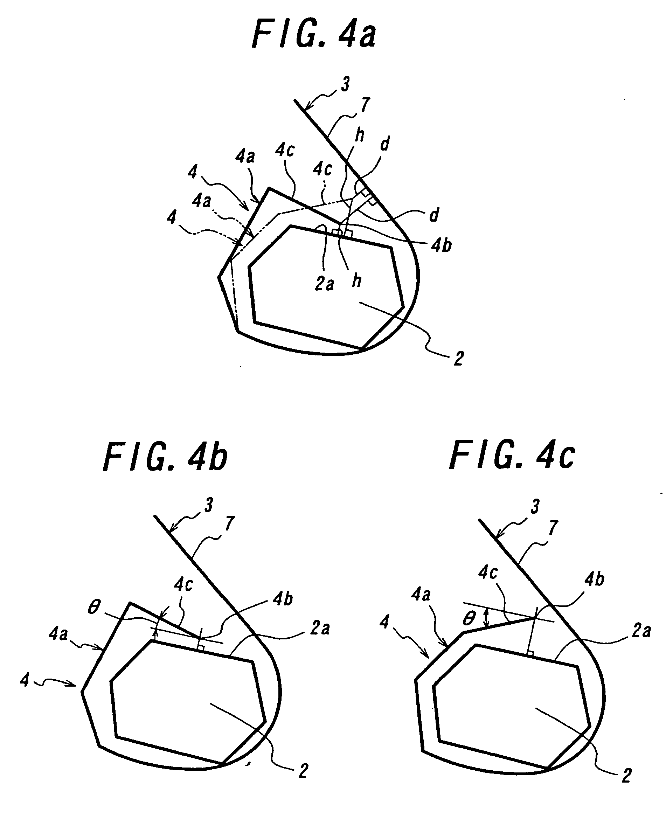

FIG. 4 is an enlarged section view of a main portion showing another two embodiments (only FIG. 4b is according to the invention), in which a case shown by a solid line is that the neighboring portion 4a to the winding end of the winding portion 4, especially, the free end part 4c located from the leading-end bending part B toward the top end side is particularly extended so as to straightly approach toward the winding end 4b with respect to the bead core surface 2a opposite thereto, as shown in FIG. 4b.

On the other hand, in a case shown by a phantom line of the figure, the similar free end part 4c is extended so as to straightly separate toward the winding end 4b with respect to the bead core surface opposite thereto, as shown in FIG. 4c (which is not however according to the invention).

Also, in these winding embodiments, a distance h from the winding end 4b to the bead core surface opposite thereto is preferably within a range of 0.3-7 mm, and a distance d from the winding end 4b to the main body portion 7 of the carcass ply is preferably within a range of 0.1-5 mm.

Also, it is preferable in both cases that the inclination angle of the free end part 4c with respect to the bead core surface opposite thereto, that is, the inclination angle θ as measured on the basis of an abscissa in rectangular coordinates in which a normal line drawn through the winding end 4b to the bead core surface 2a is an ordinate and a straight line segment perpendicular to the ordinate through the winding end 4c is an abscissa as shown in FIGS. 4b and 4c is within a range of -15° to 60°.

Even in these embodiments, therefore, the action and effects similar to those of FIG. 2 can be obtained by interposing the rubber composition 6 constituting a part of the stiffener between the bead core 2 and the winding portion 4 of the carcass ply 3, particularly the neighboring portion 4a to the winding end.

Furthermore, although the rubber composition constituting a part of the stiffener is arranged between the bead core and the carcass ply in the illustrated embodiment, it may be made of a rubber completely different from the stiffener.

The invention will be further described with reference to the following Examples, wherein Example tires 1, 2 and 3 are not however according to the invention.

### Example 1

Example tires 1 and 2 have a tire size of 315/60 R22.5 and comprise a bead portion having a winding structure shown in FIG. 2, in which the neighboring portion 4a to the winding end is extended at substantially a constant distance from the bead core surface, and the winding end 4b is positioned at a widthwise central portion of the bead core surface 2a and the distance therefrom to the main body portion of the carcass ply is 4 mm, and the thickness of the rubber composition located between the neighboring portion 4a and the bead core surface 2a and having a JIS A hardness of 60 is 5 mm and 6.3 mm, respectively, and Example tires 3 and 4 comprise a bead portion in which a winding embodiment of the winding portion is changed as shown in FIGS. 4c and 4b, respectively. Each of these tires is run at 60 km/h on a drum for a durability test under a maximum air pressure of 850kPa and a load of 117.6kN to measure a running distance until problems occur.

Also, strain in the pulling-out direction at section of the winding end of the carcass ply is measured by a CT scan upon stopping the tire and further strain in the circumferential direction is measured from strain at the outside of the side portion.

These results are shown in Table 1.

Moreover, the conventional tire shown in the table has a bead portion structure shown in FIG. 1.

Also, numerical values in the table are represented by an index on the basis that the conventional tire is a control wherein the larger the measured value, the larger the index value.

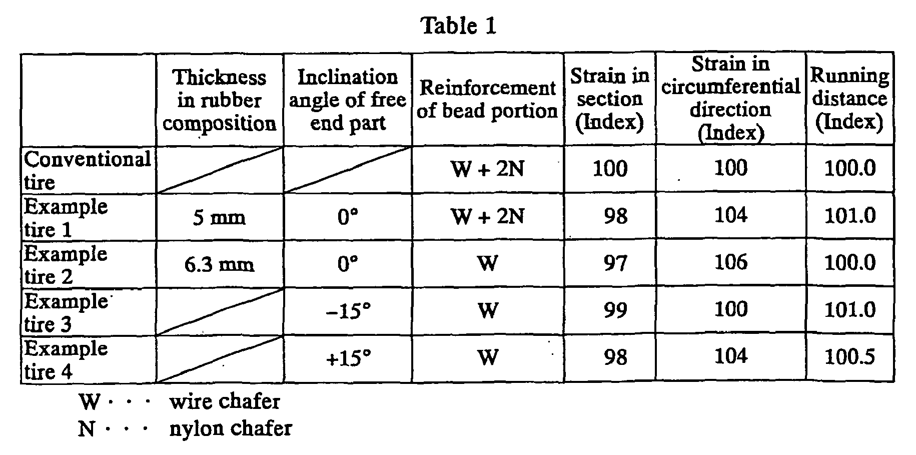

According to the above table, it could be confirmed in the example tires that since the winding end of the carcass ply is located close to the bead core, the strain in the circumferential direction tends to be increased, but the strain in the pulling-out direction at section is advantageously decreased by the restraining force against the pulling-out under the action of the rubber composition constituting a part of the stiffener.

As a result of these facts, the running distance and hence the durability can sufficiently be ensured.

As seen from the above, in the pneumatic tire according to the invention, when the side portion of the carcass ply is particularly wound around the bead core, a pulling-out restraint layer of the carcass ply is arranged between the winding portion and the bead core, whereby the occurrence of bead portion cracking resulted from the winding of the side portion of the carcass ply to a higher position outward in the radial direction of the tire can be prevented but also the tensile force applied to the main body portion of the carcass ply can sufficiently be supported by the pulling-out restraint layer, and hence pulling-out of the carcass ply can effectively be prevented.

## Claims

1. A pneumatic tire comprising a pair of bead portions (1), each including a bead core (2) having a hexagonal shape in section, and a carcass ply (3) extending between the bead cores and winding its side portion around the respective bead core, and a pulling-out restraint layer (6) for the carcass ply is arranged between the bead core and a winding portion (4) of the carcass ply, wherein the winding portion (4) of the carcass ply (3) has one or more bending parts (B) in a winding direction around the bead core (2), **characterized in that**
a free end part (4c) of the winding portion (4), extending from a leading end bending part (B) toward a winding end (4b), straightly approaches the top surface of the bead core (2).

2. A pneumatic tire as claimed in claim 1, wherein the rubber composition of said pulling-out restraint layer (6) has a JIS A hardness of 20-90.

3. A pneumatic tire as claimed in claim 1 or 2, wherein a distance (h) from a winding end (4b) of the carcass ply (3) to a surface of the bead core (2) opposite thereto is not less than 0.3 mm but not more than 7 mm.

4. A pneumatic tire as claimed in any of claims 1 to 3, wherein a distance of radius from a center of the tire to the winding end (4b) of the carcass ply (3) is not more than a distance of radius in a position located at an outermost side in the whole winding portion of the carcass ply in the radial direction of the tire.

5. A pneumatic tire as claimed in any of claims 1 to 4, wherein a distance (d) from the winding end (4b) of the carcass ply (3) to a main body portion (7) of the carcass ply extending between the bead cores is not less than 0.1 mm but not more than 5 mm.

6. A pneumatic tire as claimed in any of claims 1 to 5, wherein the bending parts (B) are located approximately in correspondence to corner parts of the bead core (2) having corner parts in its cross section.

## Patentansprüche

1. Luftreifen, der ein Paar von Wulstabschnitten (1) umfasst, die jeder einen Wulstkern (2), der im Schnitt einen sechseckigen Querschnitt hat, und eine Karkassenlage (3), die sich zwischen den Wulstkernen erstreckt und ihren Seitenabschnitt um den jeweiligen Wulstkern wickelt, und eine Auszugsbeschränkungslage (6) für die Karkassenlage, die zwischen dem Wulstkern und einem Wicklungsabschnitt (4) der Karkassenlage angeordnet ist, einschließen, wobei der Wicklungsabschnitt (4) der Karkassenlage (3) einen oder mehrere Biegungsteile (B) in einer Wicklungsrichtung um den Wulstkern (2) hat, **dadurch gekennzeichnet, dass**
sich ein freier Endteil (4c) des Wicklungsabschnitts (4), der sich von einem Vorderende-Biegungsteil (B) zu einem Wicklungsende (4b) hin erstreckt, gerade der oberen Fläche des Wulstkerns (2) annähert.

2. Luftreifen nach Anspruch 1, wobei die Kautschukzusammensetzung der Auszugsbeschränkungslage (6) eine JIS-A-Härte von 20-90 hat.

3. Luftreifen nach Anspruch 1 oder 2, wobei ein Abstand (h) von einem Wicklungsende (4b) der Karkassenlage (3) bis zu einer demselben gegenüberliegenden Oberfläche des Wulstkerns (2) nicht weniger als 0,3 mm, aber nicht mehr als 7 mm, beträgt.

4. Luftreifen nach einem der Ansprüche 1 bis 3, wobei ein Radiusabstand von einer Mitte des Reifens bis zu dem Wicklungsende (4b) der Karkassenlage (3) nicht mehr beträgt als ein Radiusabstand in einer Position, die sich an einer äußersten Seite in dem gesamten Wicklungsabschnitt der Karkassenlage in der Radialrichtung des Reifens befindet.

5. Luftreifen nach einem der Ansprüche 1 bis 4, wobei ein Abstand (d) von dem Wicklungsende (4b) der Karkassenlage (3) bis zu einem Hauptkörperabschnitt (7) der Karkassenlage, der sich zwischen den Wulstkernen erstreckt, nicht weniger als 0,1 mm, aber nicht mehr als 5 mm, beträgt.

6. Luftreifen nach einem der Ansprüche 1 bis 5, wobei sich die Biegungsteile (B) annähernd in Übereinstimmung mit Eckteilen des Wulstkerns (2) befinden, der in seinem Querschnitt Eckteile hat.

## Revendications

1. Bandage pneumatique, comprenant une paire de parties de talon (1), englobant chacune une tringle (2) ayant une section de forme hexagonale, et une nappe de carcasse (3) s'étendant entre les tringles, et enroulant sa partie latérale autour de la tringle respective, et une couche de retenue contre un arrachement (6) de la nappe de carcasse étant agencée entre la tringle et une partie d'enroulement (4) de la nappe de carcasse, la partie d'enroulement (4) de la nappe de carcasse (3) comportant une ou plusieurs parties à fléchissement (B) dans une direction d'enroulement autour de la tringle (2), **caractérisé en ce que**
une partie d'extrémité libre (4c) de la partie d'enroulement (4), s'étendant à partir d'une partie à fléchissement d'extrémité avant (B) vers une extrémité d'enroulement (4b), se rapproche en ligne droite de la surface supérieure de la tringle (2).

2. Bandage pneumatique selon la revendication 1, dans lequel la composition de caoutchouc de ladite couche de retenue contre un arrachement (6) a une dureté JIS A comprise entre 20 et 90.

3. Bandage pneumatique selon les revendications 1 ou 2, dans lequel une distance (h) depuis une extrémité d'enroulement (4b) de la nappe de carcasse (3) jusqu'à une surface de la tringle (2) qui y est opposée n'est pas inférieure à 0,3 mm, mais non supérieure à 7 mm.

4. Bandage pneumatique selon l'une quelconque des revendications 1 à 3, dans lequel une distance du rayon depuis un centre du bandage pneumatique jusqu'à l'extrémité d'enroulement (4b) de la nappe de carcasse (3) n'est pas supérieure à une distance de rayon dans une position située au niveau du côté externe extrême dans l'ensemble de la partie d'enroulement de la nappe de carcasse, dans la direction radiale du bandage pneumatique.

5. Bandage pneumatique selon l'une quelconque des revendications 1 à 4, dans lequel une distance (d) depuis l'extrémité d'enroulement (4b) de la nappe de carcasse (3) jusqu'à une partie de corps principale (7) de la nappe de carcasse s'étendant entre les tringles n'est pas inférieure à 0,1 mm, mais non supérieure à 5 mm.

6. Bandage pneumatique selon l'une quelconque des revendications 1 à 5, dans lequel les parties à fléchissement (B) sont agencées pratiquement de manière correspondante à des parties de coin de la tringle (2), comportant des parties de coin dans sa section transversale.
